# EUROPÄISCHE PATENTSCHRIFT

(11) **EP 1 789 712 B1**
(45) Veröffentlichungstag und Bekanntmachung des Hinweises auf die Patenterteilung: **09.04.2008**
(21) Anmeldenummer: 05784763.4
(22) Anmeldetag: 14.09.2005
(51) Int. Cl.: F16L 1/00, F16L 27/06

(54) **AXIAL- UND RADIALSPIEL SOWIE WINKELAUSGLEICH TOLERIERENDE ROHRVERBINDUNG**
AXIAL AND RADIAL PLAY AND ANGLE COMPENSATION OF A TOLERATING PIPE CONNECTION
RACCORD DE TUYAUX A TOLERANCE DE JEU AXIAL ET RADIAL ET A COMPENSATION ANGULAIRE

(30) Priorität: 17.09.2004 DE 202004014684 U
(43) Veröffentlichungstag der Anmeldung: 30.05.2007
(73) Patentinhaber: Fey Lamellenringe GmbH & Co. KG, 86343 Königsbrunn (DE)
(72) Erfinder: HOLZHEU, Peter, Ludwig, 86343 Königsbrunn (DE)
(74) Vertreter: Wiedemann, Markus
(86) Internationale Anmeldenummer: PCT/DE2005/001605
(87) Internationale Veröffentlichungsnummer: WO 2006/029601

(56) Entgegenhaltungen:
- BE-A- 537 951
- DE-A1- 3 241 750
- DE-A1- 4 104 906
- DE-A1- 4 136 799

## Beschreibung

### Stand der Technik

Die Erfindung geht aus von einer Axial- und Radialspiel sowie Winkelausgleich tolerierenden Rohrverbindung, insbesondere von einer Rohrverbindung in Abgasleitungen von Brennkraftmaschinen, mit einem am Ende eines Rohres ausgebildeten Innenteil, das von einem Glockenteil am Ende eines anderen Rohres umfasst ist, wobei wenigstens ein Lamellenring in einer Ringnut in der radial äußeren Fläche des Innenteils oder in der radial inneren Fläche des Glockenteils gehalten ist, der gegen die radial innere Fläche des Glockenteils oder gegen die radial äußere Fläche des Innenteils spannt, wobei die radial innere Fläche des Glockenteils und/oder die radial äußere Fläche des Innenteils als in Bezug zum Lamellenring konkave Kugelkalottenfläche oder als konkav ballige Fläche ausgebildet ist, wobei der wenigstens eine Lamellenring gegen die Kugelkalottenfläche oder die ballige Fläche spannt, nach dem Oberbegriff des Patentanspruchs 1.

Eine Abdichtung der Rohrverbindung mit keiner oder äußerst geringer Leckage von umweltgefährdenden Medien wie beispielsweise Abgasen von Brennkraftmaschinen gewinnt vor dem Hintergrund des gestiegenen Umweltbewusstseins und gesetzlicher Bestimmungen wie beispielsweise der Luftverordnung TA 2003 oder der VDI-Norm 2440 immer mehr an Bedeutung.

Der wenigstens eine Lamellenring hat die Aufgabe, die Rohrverbindung gegenüber der Umgebung möglichst hermetisch abzudichten. Solche Lamellenringe bestehen aus einem dünnen Stahlband oder aus einem anderen Material, sind konstruktiv einfach und benötigen einen geringen Einbauraum in axialer wie in radialer Richtung. Deshalb sind sie in bestehende Rohrverbindungen leicht nachrüstbar. Weiterhin sind sie aufgrund ihrer üblichen Ausführung aus Metall hitzebeständig und bruchfest, weshalb sie sich hervorragend eignen, um eine Rohrverbindung in Bezug auf aggressive und unter hohen Temperaturen stehende Medien abzudichten, weshalb sie gerade im Hinblick auf heiße Motorenabgase mit Temperaturen bis zu 730 °C als Dichtungen in Abgasrohrverbindungen vorteilhaft sind.

Die Wirkung eines solchen Lamellenrings beruht auf dem gleichen Effekt wie er bei Spalt- oder Labyrinthdichtungen auftritt, d.h. er lenkt die Strömung vom Arbeitsdurchmesser weg zum Nutgrund hin und bildet dort aufgrund des geringen noch frei gelassenen Spalts eine Drossel, an welcher Druckenergie verloren geht. Der Lamellenring senkt folglich infolge Strömungsumlenkung und Drosselung ein hohes Druckniveau auf ein niedriges Niveau ab und verringert eine Strömung am Arbeitsdurchmesser vorbei.

Eine Rohrverbindung ist aus der DE 41 36 799 C2 bekannt, wobei sowohl die radial innere Umfangsfläche des Glockenteils als auch die radial äußere Umfangsfläche des Innenteils zylindrisch sind und mehrere Lamellenringe in Außennuten des Innenteils gehalten sind. Zwischen dem Nutgrund der Außennuten und der radial inneren Umfangsfläche der Lamellenringe ist ein kleiner lichter Spalt vorhanden, andererseits liegen die Lamellenringe aufgrund der Vorspannung, welche aus ihren gegenüber der radial inneren Umfangsfläche des Glockenteils größeren Außendurchmessern resultiert, mit ihrer radial äußeren Umfangsfläche am Glockenteil dichtend an, wodurch ein gewisses Axial- und Radialspiel sowie ein Winkelausgleich zwischen den beiden Rohren möglich ist.

Gerade wegen des heutzutage aufgrund einer hohen Anzahl von Aggregaten überfüllten Motorraumes und oft großer Motorbewegungen von selbstzündenden Brennkraftmaschinen ist es notwendig, dass Rohrverbindungen in Abgasrohren von Brennkraftmaschinen möglichst flexibel ausgeführt sind. Diese Anforderung an Rohrverbindungen besteht auch in anderen Bereichen der Technik.

Aus der DE 32 41 750 A1 ist eine mit Ausnahme eines Radialspiels gattungsgemäße Rohrverbindung bekannt, bei welcher die radial innere Fläche des Glockenteils und die radial äußere Fläche des Innenteils als in Bezug zum Lamellenring konkave Kugelkalottenflächen ausgebildet sind, wobei der wenigstens eine Lamellenring in einer Ringnut des Innenteils aufgenommen ist und gegen die Kugelkalottenfläche des Glockenteils spannt. Jedoch ist kein Radialausgleich zwischen dem als Gleitring ausgeführten Innenteil und dem als Gleithülse ausgeführten Außenteil vorgesehen, so dass das die Gleitringhülse bei der Montage mit einem geeigneten Werkzeug aufgesprengt werden muss, um die beiden Hülsenhälften sodann axial über den Gleitring zu schieben und wieder zusammen zu fügen.

Der Erfindung liegt demgegenüber die Aufgabe zugrunde, eine Rohrverbindung der eingangs erwähnten Art derart weiter zu bilden, dass sie einfacher zu montieren ist und darüber hinaus bessere Dichtigkeitseigenschaften aufweist.

Erfindungsgemäß wird diese Aufgabe durch die Merkmale des Patentanspruchs 1 gelöst.

### Vorteile der Erfindung

Bei der Rohrverbindung gemäß der Erfindung ist die radial innere Fläche des Glockenteils und/oder die radial äußere Fläche des Innenteils als in Bezug zum Lamellenring konkave Kugelkalottenfläche oder als konkav ballige Fläche ausgebildet, wobei der wenigstens eine Lamellenring gegen die Kugelkalottenfläche oder die ballige Fläche spannt, welche dann den sog. Arbeitsdurchmesser des Lamellenrings bildet. Dabei sorgt die Vorspannung des wenigstens einen Lamellenrings für eine spaltfreie Abdichtung gegenüber dem Arbeitsdurchmesser, während zum Nutgrund der Ringnut hin ein kleiner Spalt freigelassen ist. Dadurch wird an den Rohrenden im wesentlichen ein durch Lamellenringe abgedichtetes Kugelgelenk realisiert, bei welchem die Lamellenringe nun im wesentlichen einer Kreisbahn folgen, wenn ein Rohr relativ zum anderen Rohr winkelig bewegt wird. Je nach dem Radius der Rohre und der Kugelkalottenflächen lässt sich so ein wesentlich größerer Winkelausgleich realisieren. Axial- und Radialspiel bzw. -ausgleich zwischen beiden Rohren ist weiterhin möglich, da bei einer Relativbewegung der beiden Rohre in axialer oder radialer Richtung der wenigstens eine Lamellenring zum Nutgrund hin einfedern kann, wenn sich der der Ringnut gegenüberliegende Arbeitsdurchmesser aufgrund der Relativbewegung verringert.

Erfindungsgemäß ist in der Ringnut wenigstens ein sich am Nutgrund abstützender Spannring gehalten, welcher eine elastische Vorspannung des wenigstens einen Lamellenrings gegen die radial innere Fläche des Glockenteils oder gegen die radial äußere Fläche des Innenteils erzeugt.

Dadurch wird zum einen die Dichtwirkung erhöht. Zum andern zentriert die elastische Vorspannung das Glockenteil gegenüber dem Innenteil, was besonders bei schwingungsbelasteten Rohrverbindungen wie beispielsweise in Abgasanlagen von Kraftfahrzeug-Brennkraftmaschinen von Vorteil ist. Denn dort besteht die Gefahr, dass die aufgrund der geforderten Ausgleichsbewegungen radialspielbehaftete Verbindung zwischen dem Glockenteil und dem Innenteil derart zu Schwingungen angeregt wird, dass das Glockenteil am Innenteil anschlägt und dadurch unerwünschte Geräusche und Schäden verursacht werden.

Die vom Spannring ausgeübte Vorspannung sorgt demgegenüber dafür, dass bei der Montage der Rohrverbindung durch elastische Verformungen des Spannrings zwar Radialausgleich stattfinden kann, unter dynamischer Belastung jedoch bei entsprechender Auslegung des Spannrings ein direkter Kontakt zwischen dem Glockenteil und dem Innenteil vermieden wird.

Nicht zuletzt sorgt die vom Spannring erzeugte Vorspannung angesichts eines Betriebstemperaturbereichs von beispielsweise minus 30 Grad Celsius Außentemperatur bis zu ca. 700 Grad Celsius des durch die Rohrverbindung geführten Abgases auch für einen Ausgleich von wärmebedingten Verformungen der Rohrverbindungsteile, insbesondere der Lamellenringe.

Durch die in den Unteransprüchen aufgeführten Maßnahmen sind vorteilhafte Weiterbildungen und Verbesserungen der im Schutzanspruch 1 angegebenen Erfindung möglich.

Gemäß einer besonders zu bevorzugenden Ausführungsform der Erfindung ist der wenigstens eine Lamellenring in einer Außennut des Innenteils gehalten und spannt gegen die radial innere Umfangsfläche des Glockenteils, wobei sowohl die radial innere Fläche des Glockenteils und die radial äußere Fläche des Innenteils als konkave Kugelkalottenflächen mit gleichem Krümmungssinn ausgebildet sind. Eine besonders gute Führung bzw. Schmiegung des Innenteils am Außenteil ergibt sich, wenn die Radien der Kugelkalottenflächen oder der balligen Flächen im wesentlichen identisch sind.

Bevorzugt können mehrere Lamellenringe in der Ringnut axial hintereinander angeordnet sein, was im Hinblick auf eine mehrfache Umlenkung der Strömung des Druckmediums günstig ist. Bevorzugt werden bei mehreren, in der Ringnut angeordneten Lamellenringen solche gleichen Typs verwendet. Infolge der Ausbildung als Kugelkalottenfläche oder als ballige Fläche haben die Lamellenringe dann bei Anlage am Arbeitsdurchmesser jeweils unterschiedliche Außendurchmesser, was einer breiten, elastischen Dichtung gleichkommt. Je mehr solcher Lamellenringe in einer Ringnut gehalten sind, umso besser ist die Schmiegung am Arbeitsdurchmesser.

Hierbei können beispielsweise ein oder mehrere einfach gewundene Lamellenringe mit axialer Stoßöffnung aus einem in einer Ebene verlaufenden Stahlband zum Einsatz kommen. Solche einfach gewundenen Lamellenringe sind besonders kostengünstig herstellbar und ihre Vorspannung gegen den Nutgrund bzw. gegen den Arbeitsdurchmesser leicht voreinstellbar.

Gemäß einer weiteren Ausführungsform finden Doppelwindungslamellenringe Anwendung, wobei die Enden der Doppelwindungen im entspannten Zustand des Doppelwindungslamellenrings von einer durch den Rest des Doppelwindungslamellenrings gebildeten Kreisform abweichend nach innen oder nach außen ragen und im gespannten Zustand des Doppelwindungslamellenrings mit dieser Kreisform fluchten. Die bezüglich der Kreisform nach innen oder außen ragenden Enden sorgen dann dafür, dass die Doppelwindungen im eingebauten Zustand nach außen oder nach innen gedrückt werden. Die Rundheit der geschlossenen Doppelwindung über 360 Grad gewährleistet einen festen Kontakt zum Nutgrund der Ringnut bzw. zum Arbeitsdurchmesser.

Das Innenteil und/oder das Glockenteil können als separate Bauteile gefertigt und an den Enden des einen Rohres und/oder des anderen Rohres befestigt sein, vorzugsweise durch Schweißung.

### Zeichnungen

Ausführungsbeispiele der Erfindung sind in der Zeichnung dargestellt und in der nachfolgenden Beschreibung näher erläutert. In der Zeichnung zeigt :
- Fig.1: eine Querschnittsdarstellung einer Doppelgelenkverbindung zwischen zwei Rohren in abgewinkelter Stellung, gemäß dem Stand der Technik.
- Fig.2: eine vergrößerte Darstellung der Rohrverbindung von Fig.1 in gerader Stellung;
- Fig.3: eine Querschnittsdarstellung einer Doppelgelenkverbindung zwischen zwei Rohren gemäß einer weiteren Ausführungsform der Erfindung mit einem Spannring;
- Fig.4: eine vergrößerte Darstellung der Rohrverbindung von Fig.3 in gerader Stellung;
- Fig.5: eine Einzeldarstellung des Spannrings in der Rohrverbindung von Fig.3.

### Beschreibung der Ausführungsbeispiele

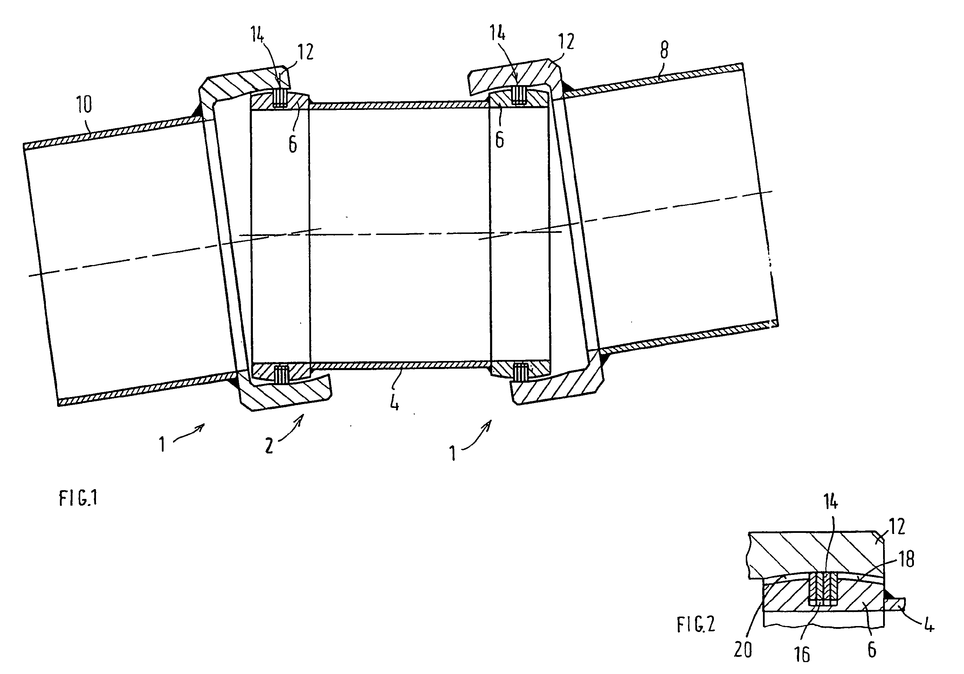

In Fig.1 sind Axial- und Radialspiel sowie Winkelausgleich tolerierende Rohrverbindungen 1 einer Abgasleitung einer Brennkraftmaschine gemäß einer bevorzugten Ausführungsform der Erfindung gezeigt. Die Rohrverbindungen 1 sind in einer Doppelgelenkverbindung 2 realisiert, in der Fachsprache auch "Knochen" genannt. Die Doppelgelenkverbindung 2 beinhaltet ein Zwischenrohr 4 mit endseitig angeordneten Innenteilen 6, welche von jeweils einem an je einem Abgasrohr 8, 10 endseitig angeordneten Glockenteil 12 umfasst sind. Die Innenteile 6 und/oder die Glockenteile 12 können als separate Bauteile gefertigt und an den Enden der Abgasrohre 8, 10 und des Zwischenrohres 4 befestigt sein, vorzugsweise durch Schweißung. Die Rohrverbindungen 1 sind identisch aufgebaut, so dass im folgenden lediglich eine der Rohrverbindungen 1 beschrieben wird.

Wenigstens ein Lamellenring, vorzugsweise vier Lamellenringe 14 sind in einer umlaufenden Außennut 16 an der radial äußeren Umfangsfläche 18 des Innenteils 6 gehalten, wobei zwischen dem Nutgrund und den radial inneren Umfangsflächen der Lamellenringe 14 jeweils ein kleiner lichter Spalt vorhanden ist. Die Lamellenringe 14 spannen mit ihren radial äußeren Umfangsflächen gegen die radial innere Umfangsfläche 20 des Glockenteils 12. Vorzugsweise sind sowohl die radial innere Umfangsfläche 20 des Glockenteils 12 und die radial äußere Umfangsfläche 18 des Innenteils 6 als konkave Kugelkalottenflächen oder als konkav ballige Flächen ausgebildet, wie insbesondere aus Fig.2 hervorgeht. Unter "ballig" soll dabei jede im Querschnitt gekrümmte Fläche verstanden werden, welche von einer zylindrischen Form abweicht. In der Fachsprache wird eine solche Fläche auch als "bombiert" bezeichnet. Bevorzugt handelt es sich um komplementär ausgebildete Kugelkalottenflächen 18, 20, deren Radien im wesentlichen identisch sind.

Alternativ könnte die Ringnut 16, in welcher die Lamellenringe 14 gehalten ist, auch in dem Glockenteil 12 ausgebildet sein und der Arbeitsdurchmesser der Lamellenringe 14 durch die radial äußere Umfangsfläche 18 des Innenteils 6 gebildet werden. Weiterhin könnte die die Lamellenringe 14 tragende Fläche am Innenteil 6 oder am Glockenteil 12 zylindrisch ausgebildet sein, sofern die gegenüberliegende Fläche am Glockenteil 12 oder am Innenteil 6, welche dann den Arbeitsdurchmesser für die Lamellenringe 14 bildet, als konkave Kugelkalottenfläche oder konkav ballige Fläche ausgebildet ist. Mit einer solchen Rohrverbindung 1 in Form eines Kugelgelenks oder Kugelteilgelenks lässt sich ein Winkelausgleich von beispielsweise bis zu 10 Grad erzielen.

Die Radien der beiden Kugelkalottenflächen 18, 20 am Glockenteil 12 und am Innenteil 6 sowie deren axiale Länge sind so gewählt, dass das Innenteil 6 zusammen mit den Lamellenringen 14, die u.U. radial zusammengepresst werden müssen, in das Glockenteil 12 eingesetzt werden können, ohne dass das Glockenteil 12 mehrteilig ausgeführt werden müsste. Aus Montagegründen münden auch die Kugelkalottenflächen 18, 20 jeweils direkt an den freien Rändern des Innenteils 6 bzw. des Glockenteils 12, ohne dass sich ein beispielsweise zylindrischer Abschnitt anschließt, der den Montagevorgang behindern könnte.

Bevorzugt sind mehrere einfach gewundene Lamellenringe 14 gleichen Typs in der Außennut 16 axial hintereinander angeordnet, was im Hinblick auf eine mehrfache Umlenkung der Strömung des Druckmediums günstig ist. Solche einfach gewundenen Lamellenringe 14 bestehen aus einem in einer Ebene verlaufenden Stahlband und haben eine axiale Stoßöffnung. Infolge der Ausbildung des Arbeitsdurchmessers als Kugelkalottenfläche 20 oder als ballige Fläche verformen sich die. Lamellenringe 14 in radialer Richtung unterschiedlich und weisen jeweils unterschiedliche Außendurchmesser auf.

Gemäß einer weiteren, hier nicht gezeigten Ausführungsform können Doppelwindungslamellenringe Anwendung finden, wobei die Enden der Doppelwindungen im entspannten Zustand des Doppelwindungslamellenrings von einer durch den Rest des Doppelwindungslamellenrings gebildeten Kreisform abweichend nach innen oder nach außen ragen und im gespannten Zustand des Doppelwindungslamellenrings mit dieser Kreisform fluchten. Die bezüglich der Kreisform nach innen oder außen ragenden Enden sorgen dann dafür, dass die Doppelwindungen im eingebauten Zustand nach außen oder nach innen gedrückt werden. Die Rundheit der geschlossenen Doppelwindung über 360 Grad gewährleistet einen festen Kontakt zum Nutgrund der Außennut 16 bzw. zum Arbeitsdurchmesser 20.

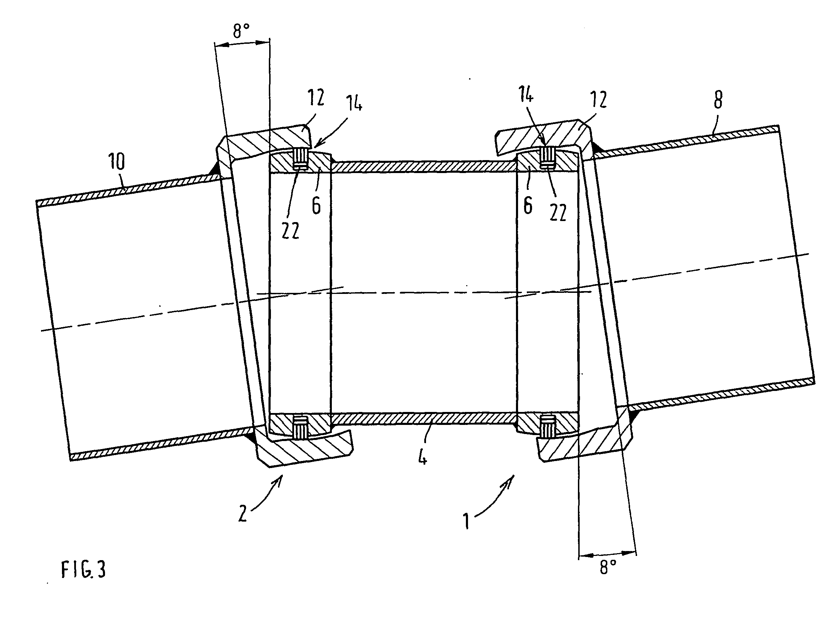

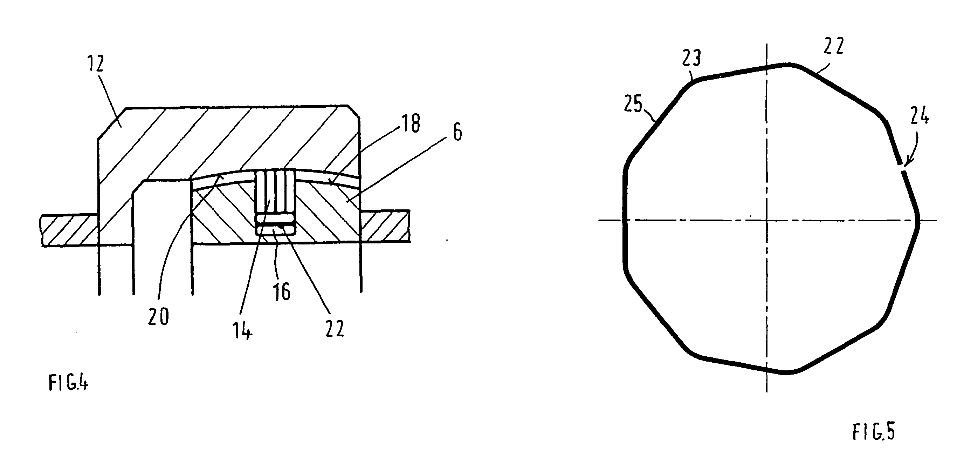

Bei dem zweiten Ausführungsbeispiel der Erfindung nach den Fig.3, 4 und 5 sind die gegenüber dem vorhergehenden Beispiel gleich bleibenden und gleich wirkenden Teile durch die gleichen Bezugszeichen gekennzeichnet. Im Unterschied zu diesem ist in der Außennut 16 wenigstens ein sich am Nutgrund abstützender Spannring 22 gehalten, welcher eine elastische Vorspannung der beispielsweise vier Lamellenringe 14 gegen die radial innere Fläche 20 des Glockenteils 12 erzeugt.

Hierzu weist der Spannring vorzugsweise die gleiche Breite auf wie die Außennut 16 und ist polygonförmig offen ausgebildet, d.h., er hat wenigstens zwei, vorzugsweise neun Ecken 23, durch welche gerade Abschnitte 25 winkelig miteinander verbunden sind und erstreckt sich nicht vollständig über 360 Grad, sondern weist eine Öffnung 24 auf. Bei der Montage der Lamellenringe 14 in der Außennut 16 wird der Spannring 22 radial zusammengedrückt, wodurch sich seine der Öffnung 24 zugeordneten Enden einander annähern und die zwischen den geraden Abschnitten 25 ausgebildeten Winkel vergrößern. Hierdurch wird die elastische, nach radial außen gerichtete Vorspannung der Lamellen 14 gegen die radial innere Umfangsfläche 20 des Glockenteils 12 erzeugt. Unter radialem Druck, wie er beispielsweise durch Schwingungen des Glockenteils 12 gegenüber dem Innenteil 6 entsteht, kann diese elastische Vorspannung einen Kontakt des Glockenteils 12 mit dem Innenteil 6 verhindern.

Die Erfindung ist nicht auf die beschriebenen Ausführungsformen beschränkt. Vielmehr sind können jegliche Arten und Typen von Lamellenringen, auch in Kombination untereinander, zur Abdichtung der Rohrverbindung 1 verwendet werden.

## Patentansprüche

1. Axial- und Radialspiel sowie Winkelausgleich tolerierende Rohrverbindung (1), insbesondere Rohrverbindung (1) in Abgasleitungen von Brennkraftmaschinen, mit einem am Ende eines Rohres (4) ausgebildeten Innenteil (6), das von einem Glockenteil (12) am Ende eines anderen Rohres (8, 10) umfasst ist, wobei wenigstens ein Lamellenring (14) in einer Ringnut (16) in der radial äußeren Fläche (18) des Innenteils (6) oder in der radial inneren Fläche (20) des Glockenteils (12) gehalten ist, der gegen die radial innere Fläche (20) des Glockenteils (12) oder gegen die radial äußere Fläche (18) des Innenteils (6) spannt, wobei die radial innere Fläche (20) des Glockenteils (12) und/oder die radial äußere Fläche (18) des Innenteils (6) als in Bezug zum Lamellenring (14) konkave Kugelkalottenfläche oder als konkav ballige Fläche ausgebildet ist, wobei der wenigstens eine Lamellenring (14) gegen die Kugelkalottenfläche (20) oder die ballige Fläche spannt, **dadurch gekennzeichnet, dass** in der Ringnut (16) wenigstens ein sich am Nutgrund abstützender Spannring (22) gehalten ist, welcher eine elastische Vorspannung des wenigstens einen Lamellenrings (14) gegen die radial innere Fläche (20) des Glockenteils (12) oder gegen die radial äußere Fläche (18) des Innenteils (6) erzeugt.

2. Rohrverbindung nach Anspruch 1, **dadurch gekennzeichnet, dass** der wenigstens eine Lamellenring (14) in einer Außennut (16) des Innenteils (6) gehalten und gegen die radial innere Umfangsfläche (20) des Glockenteils (12) spannt, wobei sowohl die radial innere Fläche (20) des Glockenteils (12) und die radial äußere Fläche (18) des Innenteils (6) als konkave Kugelkalottenflächen mit gleichem Krümmungssinn ausgebildet sind.

3. Rohrverbindung nach Anspruch 2, **dadurch gekennzeichnet, dass** die Radien der Kugelkalottenflächen (18, 20) im wesentlichen identisch sind.

4. Rohrverbindung nach wenigstens einem der vorhergehenden Ansprüche, **dadurch gekennzeichnet, dass** in der Ringnut (16) mehrere Lamellenringe (14) axial hintereinander angeordnet sind.

5. Rohrverbindung nach wenigstens einem der vorhergehenden Ansprüche, **dadurch gekennzeichnet, dass** wenigstens ein Lamellenring ein einfach gewundener Lamellenring (14) mit axialer Stoßöffnung aus einem in einer Ebene verlaufenden Stahlband ist.

6. Rohrverbindung nach wenigstens einem der vorhergehenden Ansprüche, **dadurch gekennzeichnet, dass** wenigstens ein Lamellenring ein Doppelwindungslamellenring aus einem gleich breitem Stahlband oder anderem Metall ist, wobei die Enden der Doppelwindungen im entspannten Zustand des Doppelwindungslamellenrings von einer durch den Rest des Doppelwindungslamellenrings gebildeten Kreisform abweichend nach innen oder nach außen ragen und im gespannten Zustand des Doppelwindungslamellenrings mit dieser Kreisform fluchten.

7. Rohrverbindung nach wenigstens einem der vorhergehenden Ansprüche, **dadurch gekennzeichnet, dass** das Innenteil (6) und/oder das Glockenteil (12) als separate Bauteile gefertigt und an den Enden des einen Rohres (4) und/oder des anderen Rohres (8, 10) befestigt sind.

8. Rohrverbindung nach wenigstens einem der vorhergehenden Ansprüche, **dadurch gekennzeichnet, dass** der Spannring (22) polygonförmig offen ausgebildet ist.

## Claims

1. A tube connection (1) allowing for axial and radial play and angular compensation, in particular a tube connection (1) in exhaust gas conduits of internal combustion engines, comprising an inner portion (6) formed on one end of a tube (4) and surrounded by a bell portion (12) on the end of another tube (8, 10), wherein at least one laminated ring (14) is held in an annular groove (16) in the radially outer surface (18) of the inner portion (6) or in the radially inner surface (20) of the bell portion (12), which is biased against the radially inner surface (20) of the bell portion (12) or against the radially outer surface (18) of the inner portion (6), wherein the radially inner surface (20) of the bell portion (12) and/or the radially outer surface (18) of the inner portion (6) is formed as a concave spherical surface (20) or as a concave dome-shaped surface with respect to the laminated ring (14), wherein the at least one laminated ring (14) is biased against the spherical surface (20) or the dome-shaped surface, **characterized in that** at least one biasing ring (22) supported on the groove bottom is held in the annular groove (16), which creates a resilient bias of the at least one laminated ring (14) against the radially inner surface (20) of the bell portion (12) or against the radially outer surface (18) of the inner portion (6).

2. The tube connection according to claim 1, **characterized in that** the at least one laminated ring (14) is held in an external groove (16) of the inner portion (6) and is biased against the radially inner peripheral surface (20) of the bell portion (12), wherein both the radially inner surface (20) of the bell portion (12) and the radially outer surface (18) of the inner portion (6) are formed as concave spherical surfaces with the same sense of curvature.

3. The tube connection according to claim 2, **characterized in that** the radii of the spherical surfaces (18, 20) are essentially identical.

4. The tube connection according to at least one of the preceding claims, **characterized in that** a plurality of laminated rings (14) are axially successively arranged in the annular groove (16).

5. The tube connection according to at least one of the preceding claims, **characterized in that** at least one laminated ring is a single-turn laminated ring (14) of a steel band extending in one plane and having an axial butt aperture.

6. The tube connection according to at least one of the preceding claims, **characterized in that** at least one laminated ring is a double-turn laminated ring of a steel band or of a different metal having uniform width, wherein the ends of the double turns, in the relaxed state of the double-turn laminated ring, deviate from the circular shape formed by the rest of the double-turn laminated ring and protrude to the inside or to the outside, and are flush with the circular form in the compressed state of the double-turn laminated ring.

7. The tube connection according to at least one of the preceding claims, **characterized in that** the inner portion (6) and/or the bell portion (12) are made as separate components and are attached on the ends of the one tube (4) and/or the other tube (8, 10).

8. The tube connection according to at least one of the preceding claims, **characterized in that** the biasing ring (22) is open and in the form of a polygon.

## Revendications

1. Raccord de tuyauterie (1) qui tolère un jeu axial et radial ainsi qu'une compensation angulaire, en particulier raccord de tuyauterie (1) dans des conduites d'échappement de moteurs à combustion interne, avec une partie intérieure (6) configurée à l'extrémité d'un tuyau (4) qui est entourée par une partie en cloche (12) à l'extrémité d'un autre tuyau (8, 10), au moins un anneau à lamelles (14) étant maintenu dans une rainure annulaire (16) dans la surface extérieure radialement (18) de la partie intérieure (6) ou dans la surface intérieure radialement (20) de la partie en cloche (12) qui serre contre la surface intérieure radialement (20) de la partie en cloche (12) ou contre la surface extérieure radialement (18) de la partie intérieure (6), la surface intérieure radialement (20) de la partie en cloche (12) et/ou la surface extérieure radialement (18) de la partie intérieure (6) étant configurée comme une surface de calotte sphérique concave par rapport à un anneau à lamelles (14) ou comme une surface bombée concave, l'anneau à lamelles qui existe au moins (14) serrant contre la surface de calotte sphérique (20) ou la surface bombée, **caractérisé en ce qu'**au moins un anneau de serrage (22) qui s'appuie sur le fond de la rainure est maintenu dans la rainure annulaire (16), anneau qui produit une précontrainte élastique de l'anneau à lamelles qui existe au moins (14) contre la surface intérieure radialement (20) de la partie en cloche (12) ou contre la surface extérieure radialement (18) de la partie intérieure (6).

2. Raccord de tuyauterie selon la revendication 1, **caractérisé en ce que** l'anneau à lamelles qui existe au moins (14) est maintenu dans une rainure extérieure (16) de la partie intérieure (6) et serre contre la surface périphérique intérieure radialement (20) de la partie en cloche (12), la surface intérieure radialement (20) de la partie en cloche (12) aussi bien que la surface extérieure radialement (18) de la partie intérieure (6) étant configurées comme des surfaces de calotte sphérique concaves avec le même sens de courbure.

3. Raccord de tuyauterie selon la revendication 2, **caractérisé en ce que** les rayons des surfaces de calotte sphérique (18, 20) sont substantiellement identiques.

4. Raccord de tuyauterie selon au moins l'une des revendications précédentes, **caractérisé en ce que** plusieurs anneaux à lamelles (14) sont placés l'un derrière l'autre dans le sens axial dans la rainure annulaire (16).

5. Raccord de tuyauterie selon au moins l'une des revendications précédentes, **caractérisé en ce qu'**au moins un anneau à lamelles est un anneau à lamelles à simple spirale avec une ouverture d'impact axiale fait en un ruban d'acier en un plan.

6. Raccord de tuyauterie selon au moins l'une des revendications précédentes, **caractérisé en ce qu'**au moins un anneau à lamelles est un anneau à lamelles à double enroulement en un ruban d'acier de même largeur ou en un autre métal, les extrémités des doubles enroulements à l'état relâché de l'anneau à lamelles à double enroulement faisant saillie de manière divergente d'une forme circulaire formée par le reste de l'anneau à lamelles à double enroulement vers l'intérieur ou vers l'extérieur et, à l'état tendu de l'anneau à lamelles à double enroulement, étant alignées avec cette forme circulaire.

7. Raccord de tuyauterie selon au moins l'une des revendications précédentes, **caractérisé en ce que** la partie intérieure (6) et/ou la partie en cloche (12) sont fabriquées en tant que pièces de construction séparées et sont fixées aux extrémités de l'un des tuyaux (4) et/ou de l'autre tuyau (8, 10).

8. Raccord de tuyauterie selon au moins l'une des revendications précédentes, **caractérisé en ce que** l'anneau de serrage (22) est configuré ouvert en forme de polygone.
